# EUROPEAN PATENT SPECIFICATION

(11) **EP 3 241 470 B1**
(45) Date of publication and mention of the grant of the patent: **17.04.2019**
(21) Application number: 17169776.6
(22) Date of filing: 05.05.2017
(51) Int. Cl.: A47K 5/12

(54) **ARRANGEMENT AND METHOD FOR DETECTING RESOURCE USAGE IN A DISPENSER, DISPENSER, AND SYSTEM AND METHOD FOR MONITORING RESOURCE USAGE IN AT LEAST ONE DISPENSER**
VORRICHTUNG UND VERFAHREN ZUM NACHWEIS VON RESSOURCENNUTZUNG IN EINEM SPENDER, SPENDER UND SYSTEM UND VERFAHREN ZUR ÜBERWACHUNG VON RESSOURCENNUTZUNG IN MINDESTENS EINEM SPENDER
AGENCEMENT ET PROCÉDÉ POUR DÉTECTER L'UTILISATION DES RESSOURCES DANS UN DISTRIBUTEUR, DISTRIBUTEUR ET SYSTÈME ET PROCÉDÉ DE SURVEILLANCE D'UTILISATION DE RESSOURCES DANS AU MOINS UN DISTRIBUTEUR

(30) Priority: 06.05.2016 DE 102016207849; 09.05.2016 EP 16168690
(43) Date of publication of application: 08.11.2017
(73) Proprietor: CWS-boco International GmbH, 47119 Duisburg (DE)
(72) Inventor: PETRAUTZKI, Dirk, 96106 Ebern (DE); JANEK, Peter Paul, 97618 Wargolshausen (DE); FABER, Carsten Holger, 96450 Coburg (DE); WANK, Florian Matthias Michael, 96465 Neustadt b. Coburg (DE); ZÜGEL, Silke, 60385 Frankfurt am Main (DE); MARTIN, Dirk, 67304 Eisenberg (DE); ZIMMERMANN, Christoph, 69469 Weinheim (DE); EINSIEDLER, Jens Klaus Siegfried, 13508 Berlin (DE)
(74) Representative: Eisenführ Speiser

(56) References cited:
- AU-A1- 2014 227 493
- US-A- 4 331 262
- US-A1- 2012 112 914
- US-A1- 2013 119 083
- US-A1- 2015 366 411

## Description

The invention relates to an arrangement for detecting resource usage in a dispenser, in particular in a washroom dispenser, a dispenser for dispensing a resource, in particular a washroom dispenser, and a method for detecting resource usage in a dispenser, in particular in a washroom dispenser. Further, the invention relates to a system and a method for monitoring resource usage in at least one dispenser, in particular in at least one washroom dispenser.

Dispensers, sensors, and methods for detecting and monitoring resource usage in a dispenser, in particular in a washroom dispenser, are known, for example, from WO 2015/086055 A1, WO 2015/010143 A1, WO 2015/165731 A1, WO 2014/035307 A1, WO 2014/027030 A2, WO 2013/016748 A1, WO 2013/016747 A1, WO 2013/113129 A1, WO 2006/065514 A1, WO 2006/065515 A 2 or WO 2005/065509 A1.

US 2015/366411 A1 discloses a domestic appliance communication system that provides consumers with the ability to remotely access information about their domestic appliances, and in particular domestic appliances which utilize consumable resources which may need to be periodically replaced or replenished. US 2013/119083 A1 discloses a method of generating ozone containing fluid comprising drawing atmospheric air into an air compartment, generating ozone within the air compartment from air in the air compartment by conversion within the compartment of oxygen in the air within the compartment into ozone to form ozonated air, discharging the ozonated air from the air compartment, mixing the ozonated discharged air with a flowable fluid to form a ozonated fluid-air mixture, and passing the ozonated fluid-air mixture out a discharge outlet. US 4,331,262 A discloses a fluid dispenser pumping fluid in increments and including a computer which, on command, determines the volume of fluid dispensed per increment, the determined value constituting a calibration value which is stored in the memory of the computer.

Existing dispensers, sensors, systems and methods, however, usually are expensive and often require the exchange of dispensers to newer ones with the respective features. Further, the detection and monitoring of resource usage is not always accurate and reliable.

Therefore, it is an object of the present invention to provide an arrangement for detecting resource usage in a dispenser, a dispenser, a method for detecting resource usage in a dispenser, and a system for monitoring resource usage in the dispenser, which reduce or eliminate one or more of the above-mentioned disadvantages. In particular, it is an object of the present invention to provide an arrangement for detecting resource usage in a dispenser, a dispenser, a method for detecting resource usage in a dispenser, and a system for monitoring resource usage in the dispenser, which are reliable and/or cost-efficient.

According to a first aspect of the invention, it is provided an arrangement for detecting resource usage in a dispenser, in particular in a washroom dispenser, comprising a sensor for detecting resource usage having an emitter and a receiver of radiation adapted to detect the absence of a resource by receiving via the receiver radiation emitted by the emitter, a counter adapted to count portions of the resource dispensed by the dispenser, and a control unit adapted to adjust counter data depending on a signal received from the sensor for detecting resource usage.

The arrangement according to the invention is suitable for detecting resource usage in a dispenser, in particular in a washroom dispenser. In particular, the resource of which the usage can be detected can be a washroom product, in particular a washroom hygiene product, such as cleansing agent, like soap, disinfecting agent, moisturizing lotion, fragrance, or the like. The resource can be provided as a fluid, like liquid or gas, or as a foam or gel, for example.

Further, in particular, the dispenser is suitable for dispensing a resource, in particular a washroom product, preferably in discrete portions. For example, the dispenser can be a dispenser for dispensing washroom hygiene products, which is wall-mounted and/or integrated into washroom furniture. Further, the dispenser can be integrated in a self-cleaning toilet for dispensing a cleansing and/or disinfecting agent, for example. Preferably, the amount of resource dispensed in a single discrete portion is known and/or can be predetermined and/or is dependent on the kind of resource used and/or can be adjusted.

In particular, detecting resource usage in a dispenser is understood in that the resource usage from a resource container, from which the resource is dispensed, can be detected. Typically, this resource container forms part of the dispenser and is usually arranged within the dispenser, at least with its larger portion. Preferably, the detection is carried out during normal operation of the dispenser, i.e. not only during installation, calibration or maintenance, but during dispensing operation in order to determine the amount of resource dispensed from and/or the amount of resource remaining in the resource container of the dispenser.

According to the present invention, it is particularly preferred to detect the usage of a resource, which is impermeable to radiation, at least to a certain extent and in particular to radiation as further detail below. Further, it is preferred that a container containing the resource is permeable to radiation, at least to a certain extent and/or in the area in which detection takes place, and in particular to radiation as further detail below.

The detection principle according to the invention is based on the principle to detect the presence of resource when the receiver does not receive radiation emitted by the emitter (due to the presence of resource between the emitter and the receiver) and to detect the absence of a resource when the receiver does receive radiation emitted by the emitter (due to the absence of resource between the emitter and the receiver). In order to reliably detect the absence of resource, the container of the resource preferably is permeable to radiation, as described above. Therefore, a container not containing resource in the area of detection (i.e. in the detection path between the emitter and receiver of radiation), preferably will not prevent the receiver from receiving radiation emitted by the emitter. In particular, in case light is used as radiation, the detection principle can also be described as a photoelectric barrier, which detects the absence of resource when radiation is received and the presence of resource (or an obstacle), when the receiver does not receive radiation emitted by the emitter. The sensor is further adapted to generate a signal depending on the detection of the presence and/or absence of resource. The sensor preferably is adapted to detect the presence and/or absence of resource in and/or from a resource container, wherein the resource container preferably forms a part of the dispenser and/or is arranged within the dispenser, at least with its larger portion.

The arrangement further comprises a counter, which is adapted to count portions, preferably discrete portions, of the resource dispensed by the dispenser.

Thus, preferably a combination of a detection of number of dispensed portions by the counter and of a detection of the the presence and/or absence of resource in a resource container is available having the advantage that a more precise determination of resource usage is possible and/or facilitated and/or that additional information can be gained from this combination.

According to a preferred embodiment, the dispenser comprises a dispensing mechanism, which can be activated via an actuation element and/or in a contactless way. For example, the dispenser can comprise a dispensing mechanism, which can be activated by a user via an activation element, like a lever, in order to dispense a portion of the resource. Further, the dispenser can comprise a contactless or hands-free dispensing mechanism. For example, the dispensing mechanism can be activated by the detection of a user via a proximity sensor and then dispense a portion of the resource. Preferably, the dispensing mechanism comprises a drive, for example an electric drive, to dispense a portion of the resource.

The counter can be adapted to work with a dispensing mechanism, which is activated by the user, and/or with a hands-free dispensing mechanism. For example, the counter can be adapted to increase the counter data each time the dispensing mechanism is activated (via an activation element and/or via the drive).

The arrangement further comprises a control unit is adapted to adjust counter data depending on a signal received from the sensor for detecting resource usage.

An adjustment of counter data can be, for example, a correction of the number of portions counted and/or and overwriting of the number of portions counted with a predetermined value, preferably a number of portions corresponding to the signal received from the sensor.

For example, it is preferred that the position of the sensor in relation to a resource container or resource supply is known. In particular, the resource level corresponding to the position of the sensor is known. Further, it is preferred that the remaining amount of resource is known and/or can be estimated, once the sensor has changed from detecting the presence of resource to detecting the absence of resource. In particular, it is preferred that the remaining amount of portions of resource is known.

In a preferred embodiment the control unit is adapted to correct and/or overwrite the counter data with the amount or number of portions corresponding to the remaining amount or number of portions, when the sensor has changed from detecting the presence of resource to detecting the absence of resource.

The advantage of the control unit being adapted to correct and/or overwrite the counter data is that during operation of the dispenser, the counter data can be or become inaccurate. For example, the amount dispensed by the dispensing mechanism can vary. For example, not the whole predetermined amount of resource is dispensed in a portion, but only a part of the portion gets dispensed. This can happen, for example, when foam has formed in an otherwise liquid soap. Therefore, dispensers which detect the usage of a resource by counting dispensed portions only, can lead to inaccurate or unreliable indications of the remaining amount of resource in the dispenser and/or the remaining amount or number of portions to be dispensed. By combining the counter with a sensor as described herein, and by connecting the counter data to the sensor signal, a more accurate and more reliable detection of usage of the resource is possible.

Counter data, and an adjustment thereof, herein is in particular to be understood as data relating to the number of dispensed portions. Preferably, the counter data is incremented each time a portion is dispensed. In particular, an adjustment of counter data means that the number of portions counted (by incrementing the counter data each time a portion is dispensed) is replaced by another number, in particular a number that has been derived in dependence on a signal received from the sensor for detecting resource usage.

Preferably, counter data and an adjustment thereof does not relate to other information, for example regarding amount of resource dispensed per dispensing action.

A further advantage of the arrangement according to the invention is that, in particular in case the position of the sensor in relation to the resource container and/or the resource level at the position of the sensor is known, the number of portions dispensed to reach the resource level corresponding to the sensor position, can be determined.

In particular, it is preferred that after an exchange of the resource supply, in particular after a new resource container has been inserted, a new detection cycle is started. Preferably, with each new detection cycle, and/or each time a new, preferably full, container of resource or resource supply is provided, the counter data is set to a predetermined value, preferably zero portions.

In this way, in particular when the amount of resource and/or number of portions corresponding to a full resource level to the resource level corresponding to the sensor position, is known, once the resource level reaches the resource level corresponding to the sensor position (i.e. when the sensor changes from detecting the presence of resource to detecting the absence of resource), it can be compared whether the counter data, i.e. the number of portions counted, corresponds to a predetermined value. Preferably, the predetermined value corresponds to a reference and/or target value. Further preferably, the predetermined value depends on the kind of resource and/or the kind of resource container provided.

Further, in case different target values for different resources and/or different resource containers are known, it can be determined whether the correct and/or desired resource is present in the dispenser or whether the counter data indicates that a different resource is present in the container. Preferably, characteristic lines for different resources and/or different resource containers are available in the control unit and or an external communication unit, in order to allow for a comparison of the counter data with the target value. Such a check or verification of the kind of resource used can be particularly preferred in areas, where the provision of a certain resource is prescribed. For example, when a certain dispenser is meant to dispense a disinfecting agent, but the counter data indicates that moisturizing lotion is provided instead, a warning signal can be generated.

In a further preferred embodiment, the arrangement can comprise two or more sensors, which preferably are arranged at different positions, such that their positions correspond to different resource levels. In this case, for example a first sensor corresponding to a higher resource level, can primarily be used to detect which resource and/or which resource containers is provided (by a comparison of the counter data with a target value), whereas the second sensor corresponding to a lower resource level, can primarily be used to correct and/or overwrite the counter data with a reference value corresponding to the lower resource level in order to (re)calibrate the counter data and to have an accurate and reliable estimate for the remaining resource in order to reliably and accurately estimate when the dispenser will be empty.

In a preferred embodiment, the control unit is adapted to set the counter data to a predetermined value depending on a signal for detection of the absence of resource received from the sensor for detecting resource usage. Preferably, the predetermined value corresponds to a reference and/or target value. Preferably, the predetermined value corresponds to an amount or number of portions of resource remaining at a resource level corresponding to the sensor position.

Further preferably, the control unit is adapted to send an alarm signal when the counter data exceeds a predetermined value and no signal for detection of the absence of resource has been received from the sensor for detecting resource usage. Further preferably, the control unit is adapted to send an alarm signal when the counter data exceeds and/or falls below a predetermined value when a signal for detection of the absence of resource has been received from the sensor for detecting resource usage.

Preferably, the predetermined value corresponds to a reference and/or target value. In case the counter data does not correspond to the predetermined value, this may be an indication that another resource than the one for which the predetermined value had been chosen, is present.

In order to allow for small deviations, the predetermined value can correspond to a value range. In this way, small deviations from the predetermined value will not result in an alarm signal.

In a preferred embodiment, the emitter and/or the receiver of radiation are arranged on a support structure and/or are covered with layer comprising or consisting of material permeable to radiation. Preferably, the support structure and or the layer consists of or contains a thermoplastic polymer, in particular polycarbonate. The advantage of arranging the emitter and the receiver of radiation on a support structure and/or covering the emitter and/or the receiver is that wear and dirt can be reduced. Since support structure and/or the layer can be, at least partly, arranged in the path of the radiation to be emitted and received, a material permeable for radiation is preferred.

In a further preferred embodiment, the arrangement is adapted to detect the exchange of a resource container in the dispenser. Preferably, the exchange of a resource container and/or a resource supply in the dispenser is detected when the sensor detects the presence of resource after it had detected the absence of resource.

In a further preferred embodiment, the sensor is periodically deactivated, in particular to save energy consumption. Preferably, the sensor is deactivated after having detected the absence of resource. The sensor can remain deactivated, for example, after the detection of the absence of resource and/or until a predetermined number of portions has been dispensed. Further preferably, the sensor can be manually activated when the resource container or resource supply is exchanged. It can also be preferred that the sensor is operated with a longer pulse interval after having detected the absence of resource. Then, as soon as the sensor detects the presence of a resource (corresponding to the exchange of the resource container or resource supply), it can be preferred that the sensor is operated with a shorter pulse interval. In a further preferred embodiment, the sensor can be deactivated or operated with a longer pulse interval in the beginning of a detection cycle until a predetermined number of portions has been dispensed. Preferably, the predetermined number of portions is lower than the target number of portions corresponding to the amount of resource between the full level and the level corresponding to the sensor position.

It is further preferred that the emitter and the receiver of radiation each are arranged on a single support element, in particular on one circuit board, preferably a printed circuit board. In a further preferred embodiment, the control unit is arranged on another support element than the emitter and the receiver of radiation or the control unit is arranged on the same support element with the emitter or the receiver of radiation. For example, it can be preferred that the emitter and the receiver each are arranged on a single support element, and the control unit is arranged on the same support element as one of the emitter or the receiver. Further, it can be preferred that the emitter and the receiver are produced on a single support element, possibly together with the control unit, wherein the single support element is then separated into two or more support elements during manufacture. This can be particularly preferred in case the support element is a printed circuit board, which can be separated at one or more predetermined breaking points, for example. In particular, it is preferred to have the design of the printed circuit board such that after separation, one circuit board containing the emitter, a second circuit board containing the receiver and possibly a further circuit board containing the control unit are created.

In a preferred embodiment, the emitter and the receiver of radiation are adapted to emit and detect electromagnetic radiation and/or acoustic radiation, in particular visible light and/or ultrasound. Further, it is preferred that the emitter and the receiver of radiation are adapted to emit and detect pulsed radiation. The pulse length can be a predetermined interval, for example a constant or varying interval. Preferably, the interval can have a duration of several minutes or several hours. The interval can be chosen such that a predetermined number of pulses is emitted per minute or per hour. Preferably, the time between pulses is as least one minute, preferably at least 2 minutes, or at least 5 minutes, or at least 10 minutes, in order to reduce energy consumption.

Preferably, the emitter is a radiation emitting element, preferably a light emitting diode (LEDs). Further preferably, the receiver is formed by a phototransistor. In particular, it is preferred that the phototransistor is operated in reverse direction. In particular, the emitter and receiver can be realized as a photoelectric barrier.

According to a further preferred embodiment, the control unit is adapted to communicate with an external communication unit in a bidirectional way, preferably in a wireless way. Preferably, information about resource usage can be transmitted from the sensor and/or the counter and/or the arrangement to the external communication unit. Further preferably, information, such as software updates, can be transmitted from the external communication unit to the sensor and/or the counter and/or the arrangement. It is further preferred that the external communication unit is adapted and arranged to communicate, preferably in a bidirectional way, with a plurality of sensors and/or a plurality of counters and/or a plurality of arrangements and/or a plurality of dispensers. For example, the wireless communication can be realized by a Bluetooth connection between the external communication unit and the sensor and/or the counter and/or the arrangement. Further preferably, the external communication unit is adapted and arranged to communicate, preferably in a wireless way, such as Bluetooth, to a backend unit, in particular in order to exchange client specific and/or process related information. Further preferably, a system to detect resource usage further comprises mobile devices like tablets or smart phones, which can receive and/or send information from and/or to the sensor and/or the counter and/or the arrangement, for example via a backend unit and/or the external communication unit.

Further preferably, the sensor is adapted to be removably installed within a dispenser and/or to be installed within a dispenser as a retrofit. This embodiment has the advantage that existing dispensers can be used with the sensor. It can be preferred, that the counter is adapted to be removably installed within a dispenser and/or to be installed within a dispenser as a retrofit. Preferably, the arrangement is adapted to be removably installed within a dispenser and/or to be installed within a dispenser as a retrofit. It can be particularly preferred that the arrangement is adapted to be inserted into a dispenser containing already a control unit and by connecting the arrangement to this dispenser control unit.

It is particularly preferred that the sensor is adapted to be installed tool-free within a dispenser and/or to be positioned within a dispenser via form-fit and/or a snap-fit connection and/or a plug connection. This embodiment provides for a particularly easy and cost efficient way to mount the sensor in or on a dispenser. It can be preferred, that the counter is adapted to be installed tool-free within a dispenser and/or to be positioned within a dispenser via form-fit and/or a snap-fit connection and/or a plug connection. Preferably, the arrangement is adapted to be installed tool-free within a dispenser and/or to be positioned within a dispenser via form-fit and/or a snap-fit connection and/or a plug connection.

It is further preferred that the sensor and/or the counter and/or the arrangement is adapted for energy supply via batteries. This provides for an independent and easy provision of energy. Further preferably, the control unit is adapted to detect the charge of batteries used in the sensor and preferably to send information about the charge of batteries to an external communication unit.

The control unit preferably is adapted to record data about resource usage, preferably in multiple detection cycles, and preferably store the data and/or send the dater to an external communication unit.

According to a further aspect of the invention, it is provided a dispenser for dispensing a resource, in particular a washroom dispenser, comprising an exchangeable resource container, an arrangement for detecting resource usage in a dispenser as described herein, wherein the sensor for detecting resource usage is arranged to detect the absence of resource in the resource container, preferably in a lower third of the resource container in its operable position. A position of the sensor in a lower third of the resource container is preferred since accuracy and reliability can be enhanced when the adjustment of the counter data depending on the sensor signal is done close to the end of the detection cycle.

It is further preferred that the dispenser comprises a dispensing opening, and a buffer reservoir arranged between the resource container and the dispensing opening. Preferred dispensers can have a buffer reservoir, which is filled with resource. In such dispensers, resource contained in the buffer reservoir can still be dispensed even if (for short time) no resource container or only an empty resource container is present in the dispenser. Preferably, the predetermined value of portions remaining in the dispenser when a resource level is reached corresponding to the position of the sensor, is taken into account.

According to a preferred embodiment of the dispenser, the sensor is arranged above the buffer reservoir in its operable position. This embodiment has the advantage, that resource spilled at the connection between the resource container and the buffer reservoir when the resource container is exchanged, preferably does not interfere with the sensor, in particular the imager and receiver of radiation.

According to a further aspect of the invention, it is provided a system for monitoring resource usage in at least one dispenser, in particular in at least one washroom dispenser, comprising at least one dispenser as described herein and at least one external communication unit.

According to a further aspect of the invention, it is provided a method for detecting resource usage in a dispenser, in particular in a washroom dispenser, comprising preferably providing an arrangement for detecting resource usage in a dispenser as described herein, detecting the absence of resource by receiving via a receiver radiation emitted by an emitter with a sensor for detecting resource usage; counting portions of the resource dispensed by the dispenser in a counter, adjusting counter data depending on a signal received from the sensor.

According to a further aspect of the invention, it is provided a method for monitoring resource usage in at least one dispenser, in particular in at least one washroom dispenser, comprising detecting the presence of a resource via at least one dispenser as described herein and transmitting information about the resource usage to at least one external communication unit.

As to the advantages, preferred embodiments and details of these further aspects and their preferred embodiments, reference is made to the corresponding advantages, preferred embodiments and details described above.

Preferred embodiments of the invention shall now be described with reference to the attached drawings, in which
- Fig. 1A:: shows a three-dimensional front view of an exemplary embodiment of a washroom dispenser with a sensor according to the invention;
- Fig. 1B:: shows a top view of the washroom dispenser according to figure 1A;
- Fig. 1C:: shows a front view of the washroom dispenser according to figure 1A;
- Fig. 1D:: shows a side view of the washroom dispenser according to figure 1A;
- Fig. 1E:: shows a section along A-A as indicated in figure 1C;
- Fig. 1F:: shows a section along B-B as indicated in figure 1D; and
- Fig. 2:: shows a three-dimensional exploded view of the washroom dispenser according to figure 1A.

In the figures, elements with the same or comparable functions are indicated with the same reference numerals.

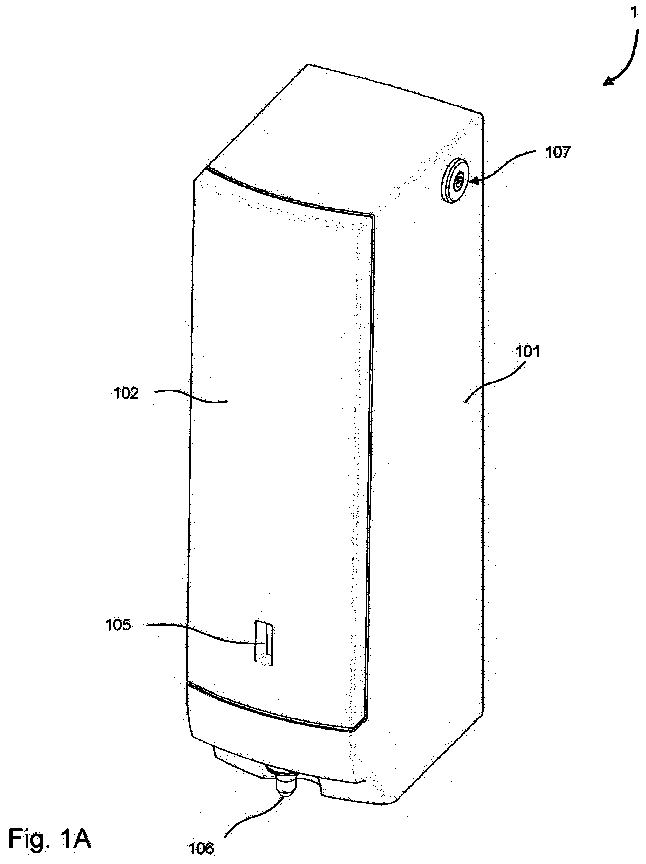

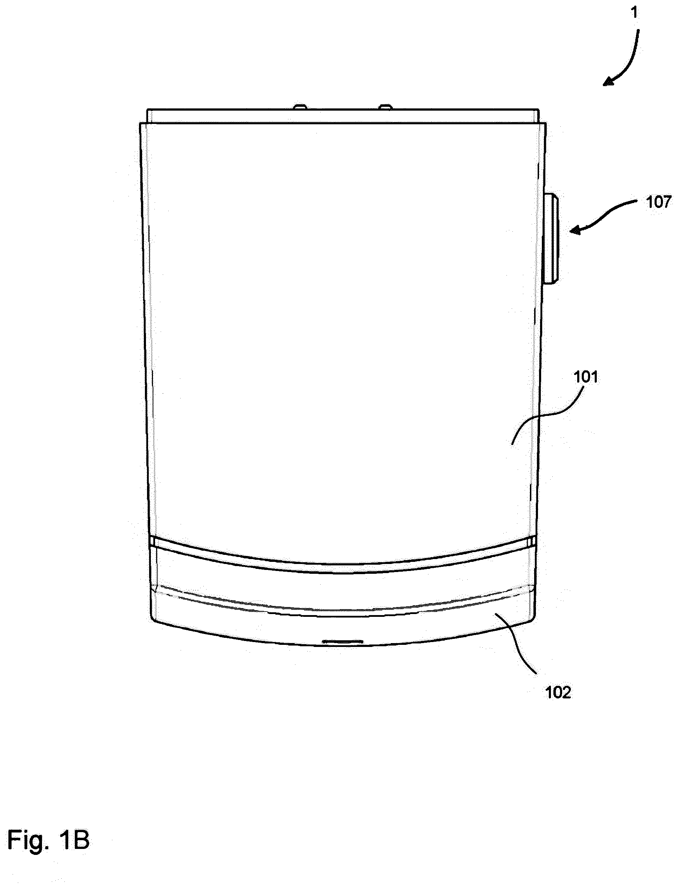

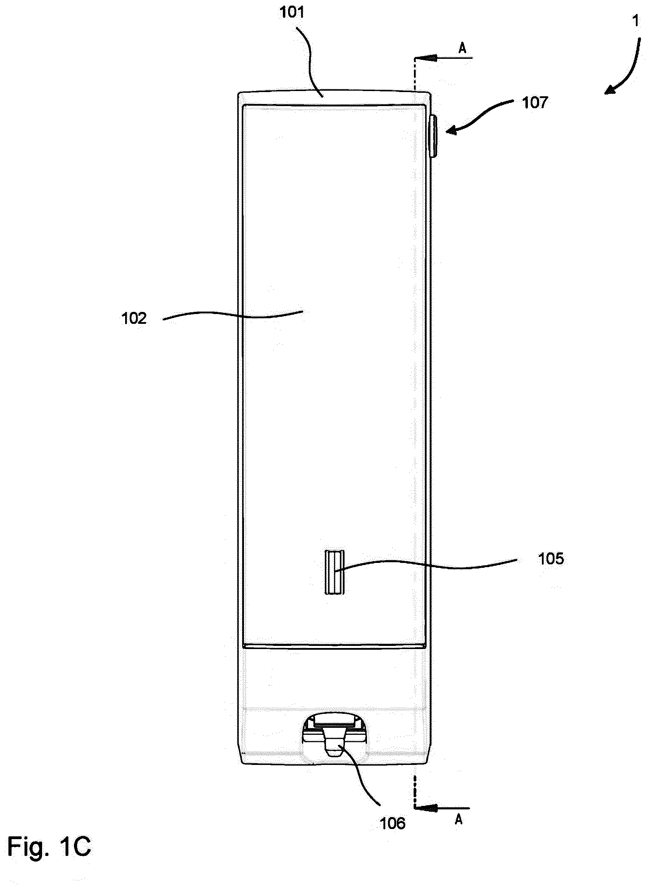

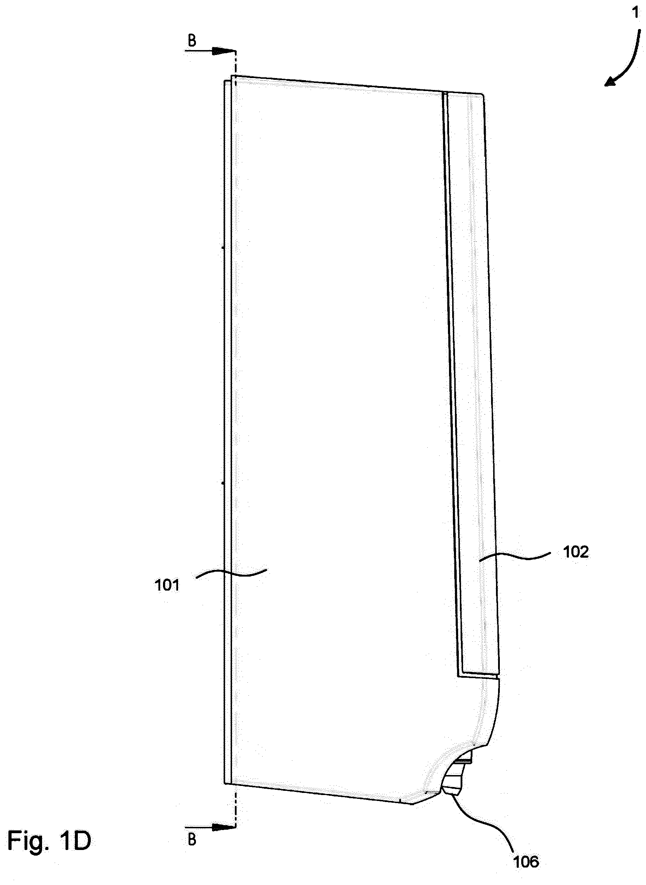

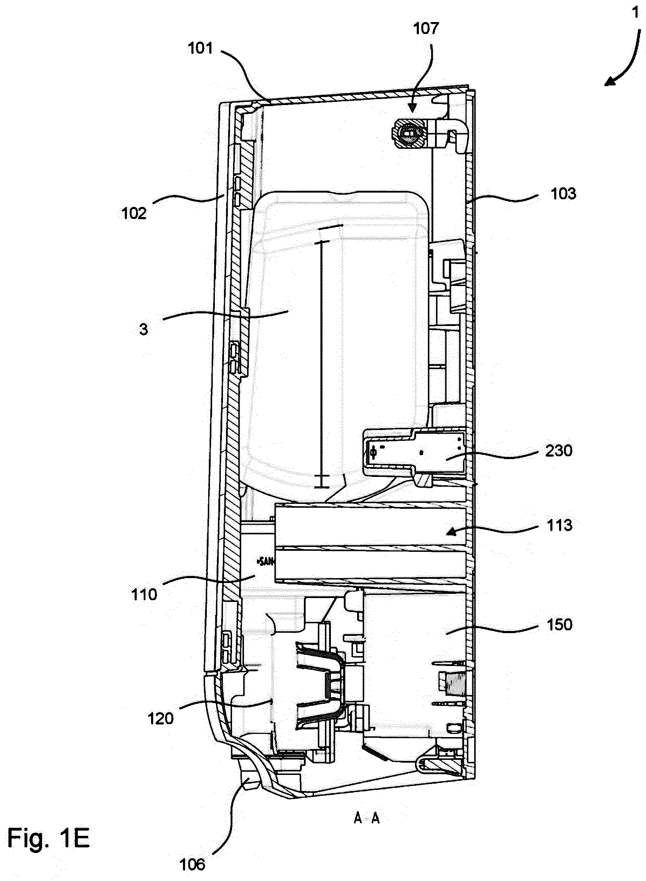

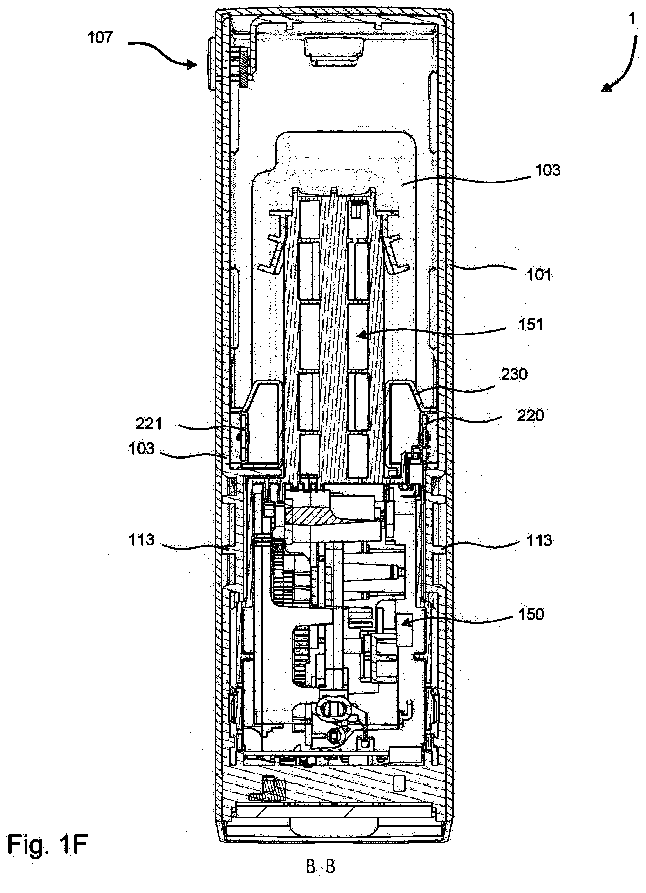

In figures 1 in figures 1A through 2, a washroom dispenser 1, namely a soap dispenser for the resource liquid or foam soap, is shown.

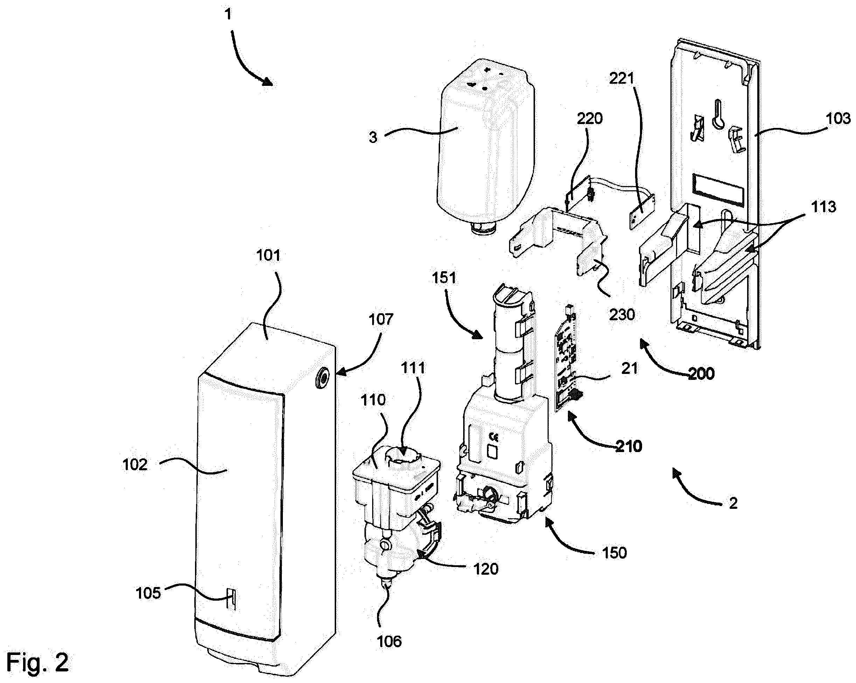

The dispenser 1 comprises an arrangement 2 for detecting resource usage in the dispenser 1. The arrangement 2 is shown in more detail in figures 1E, 1F and 2. The dispenser 1 comprises a housing 101 with a front cover 102 and a back wall 103. The housing 101 can be closed, as shown in the figures or it can be opened (not depicted. In the closed position, the housing 101 can be locked with lock 107. An inspection window 105 is provided in the front cover 102.

A bottle of soap 3 is provided as a resource container.

The back wall 103 comprises two support arms 113. Between the support arms 113, and electric drive 150, provided with energy by a battery pack 151, is positioned. Connected to the electric drive 150 is a dispensing mechanism 120 with a dispense opening 106. The dispensing mechanism 120 preferably is a hands-free mechanism detecting the presence of a user with a proximity sensor. Between the dispensing mechanism 120 and the resource container three a tougher reservoir 110 is provided. An opening of the resource container three can be connected with an opening 111 of the buffer reservoir 110.

On the back wall 103, above support arms 113, an arrangement 2 is releasably positioned, as can be seen in particular in figures 1E, 1F, and 2. Arrangement 2 is suitable for retrofitting existing dispensers 1.

Arrangement 2 comprises a sensor 200 and a counter 21. Sensor 200 comprises a printed circuit board 210 comprising the control unit and two printed circuit boards 220, 221, each comprising one of the emitter and the receiver. As can be seen in particular in figure 2, the two circuit boards 220, 221 are positioned in a sensor housing 230. The position of the sensor 200, in particular the position of the emitter and the receiver, is such that the sensor is arranged to detect the absence of resource in a lower third of the resource container 3 in operable position.

When a new resource container 3 is put in place, a new detection cycle is started.

With each activation of electric drive 150, the counter, preferably also positioned on printed circuit board 210, is incremented. Further, as long as resource in resource container three has a high resource level, the sensor two will detect the presence of resource, since resource present in resource container three will prevent radiation emitted from the matter to be received by the receiver. When resource is further dispensed in portions by the dispensing mechanism 120 activated by the electric drive 150, the resource level in resource container 3 will sink. When the resource level passes the position of sensor 200, the sensor 200 will detect the absence of resource, since the radiation emitted by the emitter will be received by the receiver through the empty container 3 at the position of the sensor 200.

Preferably, the amount of portions of resource in the resource container 3 corresponding to the amount of resources present in resource container 3 below the resource level corresponding to the position of sensor 200, is known and preferably set as a predetermined value. When the sensor 200 detects the absence of resource in resource container 3 at the position of the sensor 200, the control unit adjusts the counter data accordingly, preferably to the predetermined value. Preferably, the predetermined value also takes into account the amount of portions of resource buffered in the buffer reservoir 110. Further, preferably, a signal indicating that the resource level corresponding to the position of the sensor 200 has been reached, is generated and for the preferably send to an external communication unit.

Further, it can be determined whether the number of portions dispensed corresponding to a change in resource level from a full level to the level corresponding to the sensor position matches a predetermined value or value range corresponding to a certain resource and/or a certain resource container shape or size. For example, in case it is detected that another resource than the one desired for the specific dispenser is provided, a warning signal can be generated.

The exchange of resource container 3 can be detected, for example, when after the sensor 200 has detected the absence of resource later again detects the presence of resource.

Further preferably, the sensor 200, in particular the control unit, is adapted to keep the time and/or to provide timestamps.

It is further preferred that the arrangement 2 communicates with an external communication unit in order to transmit information about resource usage and/or to receive software updates and/or client specific information.

The arrangement 20 and the dispenser 1 have several advantages. By providing an arrangement 2 suitable for retrofit, existing dispensers 1 can be reused. Since the arrangement 2 is adapted for bidirectional communication with an external communication unit, information about resource usage can be transmitted from the sensor and information, for example software updates, can be received by the sensor 200. Further, the combination of the counter 21 and the sensor 200 leads to a very reliable and accurate detection of resource usage. Additionally, the arrangement 2 is adapted such that energy consumption is particularly low. This is further enhanced in case the radiation is pulsed.

In the following, further aspects and preferred embodiments are described.

The invention further preferably relates to systems, in particular interconnected systems for fill level detection of consumable goods in the form of sheets, for example in the form of paper, cellulose or cloth, and in particular such consumable goods, which are arranged in stacks or rolls. Examples relate to interconnected systems in washroom hygiene, here toilet paper dispensers with improved fill level sensor technology.

In particular, the reliable fill level detection of consumable goods substantially in the form of sheets, in particular in the form of paper, like paper towels or toilet paper, for example, arranged in a stack or on a roll, or also cellulose or cloth consumable goods, can be an object of the invention.

Existing solutions are described in WO 2015/086055A1, for example. Disadvantages of existing solutions are that reliability is improvable, in particular in an exchange of the product, and that they are expensive.

The following embodiments are preferred:
▪ The measurement is realized via a light sensor technology, wherein the sender and the receiver are arranged on the same sensor board and the measurement of the paper or towel roll diameter is realized via a reflection with the paper or towel roll.
▪ The resolution/measurement accuracy of the sensors' measurement is realized according to requirements by the number of diodes installed on the sensor board (PCB).
▪ Herewith, towel rolls, paper rolls as well as paper stacks can be measured.
▪ Different colors of towels or paper (except for black) can be measured.
▪ The measurement board and the application board can be realized as discrete boards separate from each other, or as combined single-board (flexprint).
▪ The applied modular construction ensures a simple and single-variety recycling of the built in materials at the end of the product life cycle.
▪ The system can measure at least one roll, but can also measure two or more rolls at the same time.
▪ For reasons of longevity and measurement reliability the diodes are protected against a direct contact to the paper or the towel roll, respectively, via a light permeable cover against dirt and/or damage.
▪ The measurement system is exchangeable and can be retrofitted via form fit and tool-free into a standard dispenser envisaged therefore, if needed.
▪ By targeted control of the measurement diodes it is possible to measure in a very energy-saving manner.
▪ This can be ensured in that at first, only the upper two diodes are active and deactivate as soon as they detect a void => not all power consumers (diodes) are permanently active, leading to an energy saving and particularly long-life measuring.
▪ The sensor technology communicates via an energy-saving Bluetooth technology with an associated washroom communication unit in a bidirectional connection.
▪ In addition, the system ensures the recording of usage frequencies (day, time,...) via the measurement of the activations.
▪ The system can measure the current charge status of the used batteries and report the respective status up to the so-called front-end device (tablet, smartphone etc).

Particular advantages are the improvement of the fill level sensor technology, also for retrofitting, suitable for bidirectional communication, cost efficiency.

## Claims

1. An arrangement (2) for detecting resource usage in a dispenser (1), in particular in a washroom dispenser, comprising a sensor (200) for detecting resource usage having an emitter and a receiver of radiation adapted to detect the absence of resource by receiving via the receiver radiation emitted by the emitter, and a counter (21) adapted to count portions of the resource dispensed by the dispenser,
**characterized by**
a control unit adapted to adjust counter data depending on a signal received
from the sensor for detecting resource usage.

2. An arrangement according to the preceding claim, wherein
the control unit is adapted to set the counter data to a predetermined value depending on a signal for detection of the absence of resource received from the sensor for detecting resource usage.

3. An arrangement according to at least one of the preceding claims, wherein
the control unit is adapted to send an alarm signal when the counter data exceeds a predetermined value and no signal for detection of the absence of resource has been received from the sensor for detecting resource usage.

4. An arrangement according to at least one of the preceding claims, wherein
the arrangement is adapted to detect the exchange of a resource container (3) in the dispenser.

5. An arrangement according to at least one of the preceding claims, wherein
the emitter and the receiver of radiation are adapted to emit and detect electromagnetic radiation and/or acoustic radiation, in particular visible light and/or ultrasound.

6. An arrangement according to at least one of the preceding claims, wherein
the control unit is adapted to communicate with an external communication unit in a bidirectional way, preferably in a wireless way.

7. An arrangement according to at least one of the preceding claims, wherein the arrangement is adapted to be removably installed within a dispenser and/or to be installed within a dispenser as a retrofit and/or the arrangement is adapted to be installed tool-free within a dispenser and/or to be positioned within a dispenser via form-fit and/or a snap-fit connection and/or a plug connection.

8. An arrangement according to at least one of the preceding claims, wherein the arrangement is adapted for energy supply via batteries.

9. An arrangement according to at least one of the preceding claims, wherein the control unit is adapted to record data about resource usage, preferably in multiple detection cycles, and preferably store the data and/or send the data to an external communication unit.

10. A dispenser (1)
for dispensing a resource, in particular a washroom dispenser, comprising
an exchangeable resource container, an arrangement (2)
for detecting resource usage in a dispenser according to at least one of the preceding claims, wherein the sensor for detecting resource usage is arranged to detect the absence of resource in the resource container, preferably in a lower third of the resource container (3) in its operable position.

11. A dispenser according to claim 10, comprising a dispensing opening, and a buffer reservoir arranged between the resource container and the dispensing opening.

12. A dispenser according to at least one of the preceding claims 10-11, wherein the sensor is arranged above the buffer reservoir in its operable position.

13. A system for monitoring resource usage in at least one dispenser, in particular in at least one washroom dispenser, comprising at least one dispenser according to at least one of the preceding claims 10-12 and at least one external communication unit.

14. A method for detecting resource usage in a dispenser (1), in particular in a washroom dispenser, comprising
detecting the absence of resource by receiving via a receiver radiation emitted by an emitter with a sensor (200) for detecting resource usage; counting portions of the resource dispensed by the dispenser in a counter (21), **characterized by**
adjusting counter data depending on a signal received from the sensor.

15. A method according to claim 14, comprising
transmitting information about the resource usage to at least one external communication unit.

## Patentansprüche

1. Vorrichtung (2) zum Detektieren von Ressourcennutzung in einem Spender (1), insbesondere in einem Waschraumspender, umfassend
einen Sensor (200) zum Detektieren von Ressourcennutzung mit einem Sender und einem Empfänger von Strahlung, die ausgebildet sind, um die Abwesenheit von Ressource zu detektieren, indem über den Empfänger vom Sender emittierte Strahlung empfangen wird, und
einen Zähler (21), der ausgebildet ist, um Portionen der von dem Spender ausgegebenen Ressource zu zählen,
**gekennzeichnet durch**
eine Steuereinheit, die ausgebildet ist, um Zählerdaten in Abhängigkeit von einem von dem Sensor zum Detektieren von Ressourcennutzung empfangenen Signal anzupassen.

2. Vorrichtung nach dem vorstehenden Anspruch, wobei
die Steuereinheit ausgebildet ist, um die Zählerdaten auf einen vorbestimmten Wert einzustellen, abhängig von einem Signal zum Detektieren der Abwesenheit von Ressource empfangen von dem Sensor zum Detektieren von Ressourcennutzung.

3. Vorrichtung nach mindestens einem der vorstehenden Ansprüche, wobei
die Steuereinheit ausgebildet ist, um ein Alarmsignal zu senden, wenn die Zählerdaten einen vorbestimmten Wert überschreiten und kein Signal zum Detektieren der Abwesenheit von Ressource von dem Sensor zum Detektieren von Ressourcennutzung empfangen wurde.

4. Vorrichtung nach mindestens einem der vorstehenden Ansprüche, wobei
die Vorrichtung ausgebildet ist, um den Austausch eines Ressourcenbehälters (3) in dem Spender zu detektieren.

5. Vorrichtung nach mindestens einem der vorstehenden Ansprüche, wobei der Sender und der Empfänger von Strahlung ausgebildet sind zum Aussenden und Erkennen von elektromagnetischer Strahlung und/oder akustischer Strahlung, insbesondere sichtbarem Licht und/oder Ultraschall.

6. Vorrichtung nach mindestens einem der vorstehenden Ansprüche, wobei die Steuereinheit ausgebildet ist, mit einer externen Kommunikationseinheit bidirektional, vorzugsweise drahtlos, zu kommunizieren.

7. Vorrichtung nach mindestens einem der vorstehenden Ansprüche, wobei die Vorrichtung ausgebildet ist, abnehmbar in einem Spender installiert zu werden und/oder als Nachrüstung einem Spender installiert zu werden und/oder die Vorrichtung ausgebildet ist, in einem Spender werkzeuglos installiert zu werden und/oder in einem Spender über Formschluss und/oder eine Schnappverbindung und/oder eine Steckverbindung positioniert werden.

8. Vorrichtung nach mindestens einem der vorstehenden Ansprüche, wobei die Vorrichtung für Energieversorgung über Batterien ausgelegt ist.

9. Vorrichtung nach mindestens einem der vorstehenden Ansprüche, wobei die Steuereinheit ausgebildet ist, um Daten über Ressourcennutzung, vorzugsweise in mehreren Erkennungszyklen, aufzuzeichnen und vorzugsweise die Daten zu speichern und/oder die Daten an eine externe Kommunikationseinheit zu senden.

10. Spender (1) zur Ausgabe einer Ressource, insbesondere Waschraumspender, umfassend
einen austauschbaren Ressourcenbehälter,
eine Vorrichtung (2) zum Detektieren von Ressourcennutzung in einem Spender gemäß mindestens einem der vorhergehenden Ansprüche, wobei der Sensor zum Detektieren von Ressourcennutzung so angeordnet ist zum Erfassen der Abwesenheit von Ressource in dem Ressourcenbehälter, vorzugsweise in einem unteren Drittel des Ressourcenbehälters (3) in seiner Betriebsposition.

11. Spender nach Anspruch 10, umfassend
eine Ausgabeöffnung und ein Pufferreservoir, das zwischen dem Ressourcenbehälter und der Ausgabeöffnung angeordnet ist.

12. Spender nach mindestens einem der vorhergehenden Ansprüche 10-11, wobei der Sensor über dem Pufferreservoir in seiner Betriebsstellung angeordnet ist.

13. System zum Überwachen der Ressourcennutzung in mindestens einem Spender, insbesondere in mindestens einem
Waschraumspender, umfassend mindestens einen Spender nach mindestens einem der vorhergehenden Ansprüche 10-12 und mindestens eine externe Kommunikationseinheit.

14. Verfahren zum Detektieren von Ressourcennutzung in einem Spender (1), insbesondere in einem Waschraumspender, umfassend Detektieren der Abwesenheit von Ressource, indem mit einem Sensor (200) zur Detektion von Ressourcennutzung über einen Empfänger von einem Sender emittierte Strahlung empfangen wird;
Zählen von Portionen der von dem Spender ausgegebenen Ressource in einem Zähler (21)
**gekennzeichnet durch**
Anpassen der Zählerdaten in Abhängigkeit von einem von dem Sensor empfangenen Signal.

15. Verfahren nach Anspruch 14, umfassend
Übertragen von Informationen über die Ressourcennutzung an mindestens eine externe Kommunikationseinheit.

## Revendications

1. Agencement (2) de détection d'utilisation de ressource dans un distributeur (1), en particulier dans un distributeur pour sanitaire, comprenant
un capteur (200) pour détecter une utilisation de ressource ayant un émetteur et un récepteur de rayonnement adapté pour détecter l'absence de ressource en recevant via le récepteur un rayonnement émis par l'émetteur, et
un compteur (21) adapté pour compter des portions de la ressource distribuée par le distributeur,
**caractérisé par**
une unité de commande adaptée pour rectifier des données de compteur selon un signal reçu en provenance du capteur pour détecter une utilisation de ressource.

2. Agencement selon la revendication précédente, dans lequel l'unité de commande est adaptée pour régler les données de compteur à une valeur prédéterminée selon un signal de détection de l'absence de ressource reçu par le capteur pour détecter une utilisation de ressource.

3. Agencement selon au moins l'une des revendications précédentes, dans lequel l'unité de commande est adaptée pour envoyer un signal d'alarme lorsque les données de compteur dépassent une valeur prédéterminée et aucun signal de détection de l'absence de ressource n'a été reçu par le capteur pour détecter une utilisation de ressource.

4. Agencement selon au moins l'une des revendications précédentes, dans lequel l'agencement est adapté pour détecter l'échange d'un contenant de ressource (3) dans le distributeur.

5. Agencement selon au moins l'une des revendications précédentes, dans lequel l'émetteur et le récepteur de rayonnement sont adaptés pour émettre et détecter un rayonnement électromagnétique et/ou un rayonnement acoustique, en particulier une lumière visible et/ou des ultrasons.

6. Agencement selon au moins l'une des revendications précédentes, dans lequel l'unité de commande est adaptée pour communiquer avec une unité de communication externe de manière bidirectionnelle, de préférence de manière sans fil.

7. Agencement selon au moins l'une des revendications précédentes, dans lequel l'agencement est adapté pour être installé de manière amovible au sein d'un distributeur et/ou pour être installé au sein d'un distributeur en rétro-installation et/ou l'agencement est adapté pour installer sans outil au sein d'un distributeur et/ou pour être positionné au sein d'un distributeur via un raccordement à ajustement de forme et/ou à emboîtement et/ou un raccordement à fiche.

8. Agencement selon au moins l'une des revendications précédentes, dans lequel l'agencement est adapté pour une alimentation en énergie via des batteries.

9. Agencement selon au moins l'une des revendications précédentes, dans lequel l'unité de commande est adaptée pour enregistrer des données concernant une utilisation de ressource, de préférence dans de multiples cycles de détection, et stocker de préférence des données et/ou envoyer les données à une unité de communication externe.

10. Distributeur (1) pour distribuer une ressource, en particulier un distributeur pour sanitaire, comprenant
un contenant de ressource échangeable,
un agencement (2) de détection d'utilisation de ressource dans un distributeur selon au moins l'une des revendications précédentes, dans lequel le capteur pour détecter une utilisation de ressource est agencé pour détecter l'absence de ressource dans le contenant de ressource, de préférence dans un tiers inférieur du contenant de ressource (3) dans sa position opérationnelle.

11. Distributeur selon la revendication 10, comprenant une ouverture de distribution, et un réservoir tampon agencé entre le contenant de ressource et l'ouverture de distribution.

12. Distributeur selon au moins l'une des revendications 10 et 11 précédentes, dans lequel le capteur est agencé au-dessus du réservoir tampon dans sa position opérationnelle.

13. Système de surveillance d'utilisation de ressource dans au moins un distributeur, en particulier dans au moins un distributeur pour sanitaire, comprenant au moins un distributeur selon au moins l'une des revendications 10 à 12 précédentes et au moins une unité de communication externe.

14. Procédé de détection d'utilisation de ressource dans un distributeur (1), en particulier dans un distributeur pour sanitaire, comprenant
la détection de l'absence de ressource en recevant via un récepteur un rayonnement émis par un émetteur avec un capteur (200) pour détecter une utilisation de ressource ;
le comptage de portions de la ressource distribuée par le distributeur dans un compteur (21),
**caractérisé par**
la rectification de données de compteur selon un signal reçu en provenance du capteur.

15. Procédé selon la revendication 14, comprenant la transmission d'informations concernant l'utilisation de ressource à au moins une unité de communication externe.
